# EUROPÄISCHE PATENTANMELDUNG

(11) **EP 2 124 324 A1**
(43) Veröffentlichungstag der Anmeldung: **25.11.2009**
(21) Anmeldenummer: 08009294.3
(22) Anmeldetag: 20.05.2008
(51) Int. Cl.: H02M 7/00

(54) **Photovoltaik-Wechselrichter**

(71) Anmelder: SMA Solar Technology AG, 34266 Niestetal (DE)
(72) Erfinder: Donth, Andreas, 34295 Edermünde (DE); Müller, Gundolf, 34277 Fuldabrück (DE); Kube, Klaus, 37133 Friedland (DE)
(74) Vertreter: Walther, Robert

(57) **Zusammenfassung**

Gegenstand der Erfindung ist ein Photovoltaik-Wechselrichter mit einem Wechselrichtergehäuse mit mindestens zwei Kammern (2, 4), die durch eine Wand verbunden sind, wobei die eine Kammer (2) höherer Schutzart die elektronischen Bauteile aufnimmt, und wobei die andere Kammer (4) an der Wand zur einen Kammer (2) mehrere Stecker (15) aufweist, wobei an der Wand (5) mehrere Sicherungsgehäuse (10, 21) zur Aufnahme jeweils einer Schmelzsicherung (11) vorgesehen sind, wobei das Sicherungsgehäuse (10, 21) einen Stecker (15) in elektrischer Verbindung mit der Sicherung (11) aufweist.

## Beschreibung

Die vorliegende Erfindung betrifft einen Photovoltaik-Wechselrichter mit einem Wechselrichtergehäuse mit mindestens zwei Kammern, die durch eine Wand verbunden sind, wobei die eine Kammer höherer Schutzart die elektronischen Bauteile aufweist, und wobei die andere Kammer an der Wand zur einen Kammer mehrere Stecker aufweist.

Ein Photovoltaik-Wechselrichter der eingangs genannten Art ist hinreichend bekannt. Hierbei besitzt der Wechselrichter zwei getrennt voneinander im Wechselrichtergehäuse angeordnete Kammern, wobei die eine Kammer höherer Schutzart, insbesondere IP65, die leistungselektronischen Bauteile, wie insbesondere die Platine, aufnimmt. In der anderen Kammer, die durch eine Wand von der einen Kammer getrennt ist, befinden sich an der Wand insbesondere die Stecker zur AC- bzw. auch zur DC-seitigen Verbindung mit der Netz- bzw. der PV-Anlage.

Wie bereits erläutert, befindet sich die Platine in der Kammer höherer Schutzart; jeder Stecker ist auf der Platine durch eine Schmelzsicherung abgesichert. Ist nun eine solche Schmelzsicherung durchgebrannt, so muss nicht nur das Gehäuse des Wechselrichters insgesamt geöffnet werden, es muss vielmehr auch noch die Kammer des Wechselrichtergehäuses zugänglich gemacht werden, die die leistungselektronischen Bauteile aufnimmt, und die der höheren Schutzartklasse insbesondere der IP65 zuzuordnen ist. Dies ist nicht nur zeitaufwändig und damit teuer, sondern birgt auch die Gefahr in sich, dass Feuchtigkeit und Schmutz in diesen Teil des Gehäuses eindringen können, was auf Dauer die Funktionsfähigkeit des Wechselrichters negativ beeinflusst. Dies gilt insbesondere, wenn sich die Wechselrichter im Freien befinden, so dass bei Öffnen der Kammer höherer Schutzart die Gefahr besteht, dass diese Kammer unmittelbar Umgebungseinflüssen ausgesetzt ist.

Der Erfindung liegt daher die Aufgabe zugrunde, einen Wechselrichter der eingangs genannten Art bereitzustellen, bei dem der Wechsel der Sicherung einfach und preiswert vorgenommen werden kann, wobei insbesondere die Notwendigkeit der Öffnung der Gehäusekammer höherer Schutzart entfallen soll, die die leistungselektronischen Bauteile aufnimmt.

Die Aufgabe wird erfindungsgemäß dadurch gelöst, dass an der Wand mehrere Sicherungsgehäuse zur Aufnahme jeweils einer Schmelzsicherung vorgesehen sind, wobei das Sicherungsgehäuse einen Stecker in elektrischer Verbindung mit der Sicherung aufweist. Hieraus wird deutlich, dass bei Beschädigung der Schmelzsicherung, insbesondere bei Durchbrennen der Schmelzsicherung, lediglich der Stecker abgenommen werden muss, um die Sicherung zu tauschen, Das heißt, dass die Sicherung nunmehr Bestandteil der Steckerverbindung ist. Insbesondere ist in diesem Zusammenhang vorgesehen, dass auf das Sicherungsgehäuse der Stecker aufsetzbar oder einschiebbar ist. Weiterhin ist konstruktiv vorgesehen, dass in der Wand eine Sicherungsaufnahme angeordnet ist, von der eine elektrische Verbindung zu dem entsprechenden elektronischen Bauteil, insbesondere der Platine, abgeht, wobei die Sicherungsaufnahme das Sicherungsgehäuse aufnimmt. Hieraus ergibt sich, dass die Sicherungsaufnahme einschließlich des Sicherungsgehäuses ein Bauteil bilden, das in fester Verbindung mit der Gehäusewand zur Trennung der beiden Kammer besteht.

Nach einer anderen Variante ist vorgesehen, dass das Sicherungsgehäuse Bestandteil des Steckers ist, wobei der Stecker mit dem Sicherungsgehäuse an einer Sicherungsaufnahme in der Wand lösbar befestigbar ist, beispielsweise durch Aufschrauben oder durch Aufklemmen des Sicherungsgehäuses auf die Sicherungsaufnahme. Auch bei dieser Variante gilt, dass die Sicherung in den Bereich des Steckers verlegt worden ist, so dass - wie bereits ausgeführt - die Gehäusekammer mit der höheren Schutzart, die die elektronischen Bauteile aufweist, nicht geöffnet werden muss, wenn eine Auswechselung der Sicherung erforderlich ist. Vorteilhaft ist hierbei im Bereich der Sicherungsaufnahme ein Ansatz vorgesehen, der in direkter Verbindung mit dem Sicherungsgehäuse steht.

Nach einer besonderen Ausführungsform ist vorgesehen, dass die mehreren Sicherungsgehäuse einen Gehäuseblock bilden, wobei der Gehäuseblock die mehreren Stecker aufnimmt. Vorteilhaft hierbei ist, dass der Gehäuseblock wesentlich einfacher gegen Schmutz und Feuchtigkeit zu isolieren ist, als dies bei einzelnen Sicherungsgehäusen der Fall ist. Das heißt, der Gehäuseblock selbst stellt in diesem Fall die Aufnahme für die Vielzahl von Steckern, mithin die Aufnahme für die Vielzahl von Sicherungsgehäusen mit den einzelnen Sicherungen dar. Das heißt, die Mehrzahl an Sicherungsgehäusen wird gebildet durch entsprechende Öffnungen im Gehäuseblock, in denen die einzelnen Sicherungen einsitzen. Die Stecker werden in die Öffnungen im Gehäuseblock geschoben, bis sie mit der jeweiligen Sicherung kontaktieren. An der Wand sind hierbei wiederum Sicherungsaufnahmen zur Aufnahme der Sicherungen vorgesehen, Der Gehäuseblock ist mit der Wand verbunden, z. B. verschraubt.

Anhand der Zeichnungen wird die Erfindung nachstehend beispielhaft näher erläutert.
- Figur 1: zeigt schematisch die Anordnung der Schmelzsicherung im Bereich der Wand zwischen der einen ersten Kammer und der zweiten anderen Kammer, wobei mehrere Sicherungsgehäuse in der Wand angeordnet sind;
- Figur 2: zeigt eine Ausführungsform gemäß Figur 1, wobei die Sicherungsgehäuse Bestandteil eines Gehäuseblocks sind, der an der Wand zwischen der einen und der anderen Kammer befestigt ist;
- Figur 3: zeigt die Anbringung eines Steckers an der Wand im Schnitt;
- Figur 4: zeigt eine Variante, bei der der Stecker und das Sicherungsgehäuse einteilig ausgebildet sind.

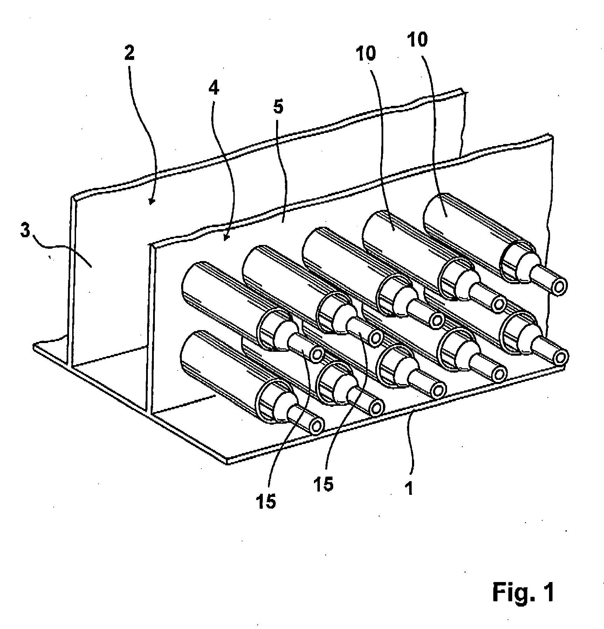

Gemäß Figur 1 weist das Wechselrichtergehäuse das Bezugszeichen 1 auf. Das Wechselrichtergehäuse 1 besitzt die eine erste Kammer 2 der Schutzartklasse IP65 zur Aufnahme der Platine 3 und anderer elektronischer Bauteile und die zweite andere Kammer 4, wobei die beiden Kammern 2 und 4 durch die Wand 5 getrennt sind. An der Wand im Bereich der anderen Kammer 4 befinden sich die Stecker zur AC- bzw. DC-seitigen Verbindung, Auf der anderen Seite der Wand 5 ist eine elektrische Verbindung 5, beispielsweise in Form eines Kabels 7 zur Verbindung z. B. mit der Platine vorgesehen.

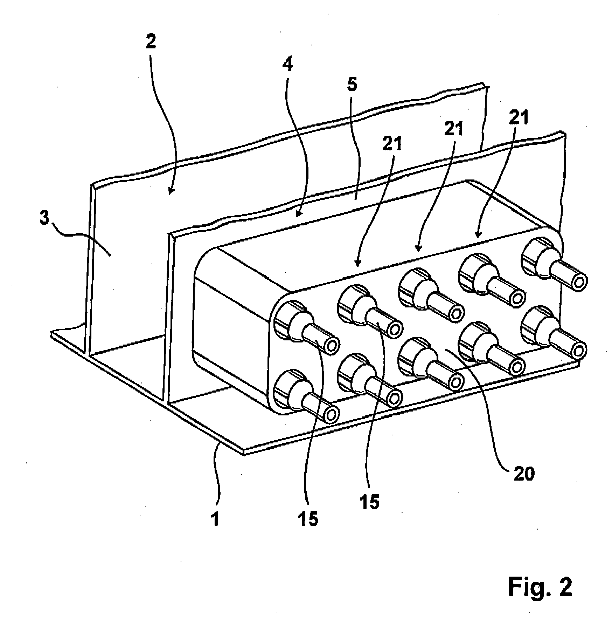

Gegenstand der Erfindung ist nunmehr die Ausbildung eines Sicherungsgehäuses 10 an der Wand 5 auf der Seite der anderen Kammer zur Aufnahme der Sicherung 11 (Fig. 2). Hierzu besitzt die Kammer 4 an der Wand eine Sicherungsaufnahme 12, wobei im Bereich der Sicherungsaufnahme 12 ein Ansatz 13 zur Aufnahme des Sicherungsgehäuses 10 an der Wand vorgesehen ist. Hierbei kann das Sicherungsgehäuse 10 auf den Ansatz 13 aufgeklebt oder aufgeschraubt sein.

Wie bereits an anderer Stelle erläutert, nimmt das Sicherungsgehäuse 10 die Sicherung 11 auf, wobei die Sicherung 11 durch die Sicherungsaufnahme 12 gehalten wird. Der mit 15 bezeichnet Stecker wird in das Sicherungsgehäuse 10 eingeschoben, beispielsweise steckbar eingesetzt, wobei der Stecker 15 hierbei in elektrischem Kontakt mit der Sicherung 11 steht.

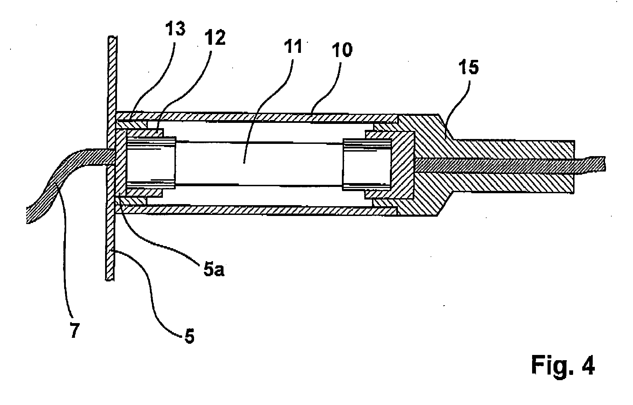

Gemäß Figur 4 ist der Stecker 15 und das Sicherungsgehäuse 10 einteilig ausgebildet. Hierbei wird dann das Sicherungsgehäuse 12 mit dem Stecker 15 als ein Teil an dem Ansatz 13 oder der Sicherungsaufnahme 12 lösbar befestigt.

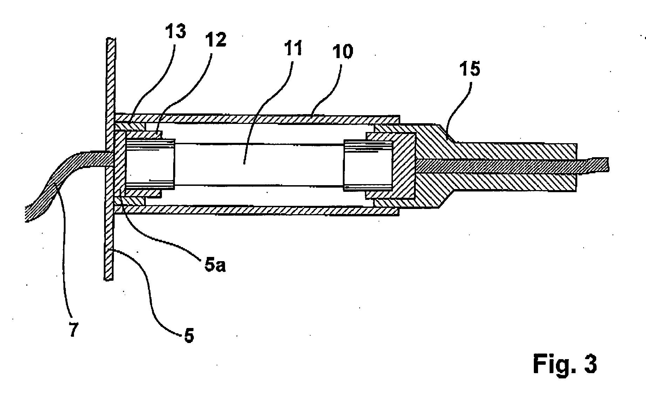

Die Ausführungsform gemäß Figur 2 unterscheidet dadurch, dass hier ein Gehäuseblock 20 vorgesehen ist, der eine Vielzahl von Sicherungsgehäusen 21 in Form von zylindrischen Öffnungen aufweist, die vom Grundsatz her ähnlich ausgebildet sind, wie die in Figur 3 dargestellten Sicherungsgehäuse, nur eben durch den Gehäuseblock 20 selbst gebildet sind. Der Vorteil hierbei liegt darin, dass der Gehäuseblock als Ganzes an der Wand montiert und abgedichtet werden kann. Auch hier ist im Gehäuseblockes in Bezug auf eine jede Sicherung bzw. korrespondierend für jeden Stecker eine Sicherungsaufnahme vorgesehen, die jeweils der Aufnahme der Sicherung 11 dient, wobei in dem Gehäuseblock 20 die Öffnungen 21 die Sicherungsgehäuse bildend zur Aufnahme der Stecker 15 vorgesehen sind.

## Patentansprüche

1. Photovoltaik-Wechselrichter mit einem Wechselrichtergehäuse mit mindestens zwei Kammern (2, 4), die durch eine Wand verbunden sind, wobei die eine Kammer (2) höherer Schutzart die elektronischen Bauteile aufnimmt, und wobei die andere Kammer (4) an der Wand zur einen Kammer (2) mehrere Stecker (15) aufweist,
**dadurch gekennzeichnet,**
**dass** an der Wand (5) mehrere Sicherungsgehäuse (10, 21) zur Aufnahme jeweils einer Schmelzsicherung (11) vorgesehen sind, wobei das Sicherungsgehäuse (10, 21) einen Stecker (15) in elektrischer Verbindung mit der Sicherung (11) aufweist.

2. Photovoltaik-Wechselrichter nach Anspruch 1,
**dadurch gekennzeichnet,**
**dass** der Stecker in das Sicherungsgehäuse (10,21) einschiebbar ist.

3. Photovoltaik-Wechselrichter nach Anspruch 1,
**dadurch gekennzeichnet,**
**dass** in der Wand (5) eine Sicherungsaufnahme (12) angeordnet ist, von der eine elektrische Verbindung zu einem elektronischen Bauteil (3), insbesondere einer Platine, abgeht, wobei die Sicherungsaufnahme (12) das Sicherungsgehäuse aufnimmt.

4. Photovoltaik-Wechselrichter nach Anspruch 3,
**dadurch gekennzeichnet,**
**dass** die Sicherungsaufnahme (12) einen zylindrischen Ansatz (13) aufweist, der das Sicherungsgehäuse (10) aufweist.

5. Photovoltaik-Wechselrichter nach Anspruch 1,
**dadurch gekennzeichnet,**
**dass** das Sicherungsgehäuse (10) Bestandteil des Steckers (15) ist, wobei der Stecker (15) mit dem Sicherungsgehäuse (10) an der Sicherungsaufnahme (12) oder dem Ansatz (13) an der Wand lösbar befestigt ist.

6. Photovoltaik-Wechselrichter nach Anspruch 4,
**dadurch gekennzeichnet,**
**dass** der Stecker (15) mit dem Sicherungsgehäuse auf die Sicherungsaufnahme (12) oder den Ansatz (13) aufschraubbar oder aufklemmbar ist.

7. Photovoltaik-Wechselrichter nach einem der voranstehenden Ansprüche,
**dadurch gekennzeichnet,**
**dass** die mehreren Sicherungsgehäuse (10) einen Gehäuseblock (20) bilden, wobei der Gehäuseblock (20) die mehreren Stecker (15) aufnimmt.

## Geänderte Patentansprüche

### Geänderte Patentansprüche gemäss Regel 137(2) EPÜ.

**1.** Photovoltaik-Wechselrichter mit einem Wechselrichtergehäuse mit mindestens zwei Kammern (2, 4), die durch eine Wand verbunden sind,
wobei die eine Kammer (2) höherer Schutzart die elektronischen Bauteile aufnimmt, und wobei die andere Kammer (4) an der Wand zur einen Kammer (2) mehrere Stecker (15) aufweist,
**dadurch gekennzeichnet,**
**dass** an der Wand (5) der Kammer (4) ***[Offenbarung Seite 5, Zeile 13 ff]*** mehrere Sicherungsgehäuse (10) zur Aufnahme jeweils einer Schmelzsicherung (11) vorgesehen sind, wobei ein Sicherungsgehäuse (10) ***[Offenbarung Seite 15, Zeile 15, 16]*** durch einen an der Wand (5) angeordneten Ansatz (13) aufgenommen ist,
wobei das Sicherungsgehäuse einen Stecker (15) in elektrischer Verbindung mit der Sicherung (11) aufweist, wodurch die Sicherung Bestandteil der Steckerverbindung ist ***[Offenbarung Seite 3, Zeile 7 bis 9]*.**

**2.** Photovoltaik-Wechselrichter nach Anspruch 1,
**dadurch gekennzeichnet,**
**dass** der Stecker in das Sicherungsgehäuse (10, 21) einschiebbar ist.

**3.** Photovoltaik-Wechselrichter nach Anspruch 1,
**dadurch gekennzeichnet,**
**dass** in der Wand (5) eine Sicherungsaufnahme (12) angeordnet ist, von der eine elektrische Verbindung zu einem elektronischen Bauteil (3), insbesondere einer Platine, abgeht, wobei die Sicherungsaufnahme (12) das Sicherungsgehäuse aufnimmt.

**4.** Photovoltaik-Wechselrichter nach Anspruch 3,
**dadurch gekennzeichnet,**
**dass** die Sicherungsaufnahme (12) den zylindrischen Ansatz (13) aufweist, der das Sicherungsgehäuse (10) aufweist.

**5.** Photovoltaik-Wechselrichter nach Anspruch 1,
**dadurch gekennzeichnet,**
**dass** das Sicherungsgehäuse (10) Bestandteil des Steckers (15) ist,
wobei der Stecker (15) mit dem Sicherungsgehäuse (10) an der Sicherungsaufnahme (12) oder dem Ansatz (13) an der Wand lösbar befestigt ist.

**6.** Photovoltaik-Wechselrichter nach Anspruch 4,
**dadurch gekennzeichnet,**
**dass** der Stecker (15) mit dem Sicherungsgehäuse auf die Sicherungsaufnahme (12) oder den Ansatz (13) aufschraubbar oder aufklemmbar ist.

**7.** Photovoltaik-Wechselrichter nach einem der voranstehenden Ansprüche,
**dadurch gekennzeichnet,**
**dass** die mehreren Sicherungsgehäuse (10) einen Gehäuseblock (20) bilden, wobei der Gehäuseblock (20) die mehreren Stecker (15) aufnimmt.
